# EUROPÄISCHE PATENTSCHRIFT

(11) **EP 3 368 780 B1**
(45) Veröffentlichungstag und Bekanntmachung des Hinweises auf die Patenterteilung: **25.03.2020**
(21) Anmeldenummer: 16800881.1
(22) Anmeldetag: 19.10.2016
(51) Int. Cl.: F16B 37/08, F16B 37/00

(54) **BEFESTIGUNGSANORDNUNG SOWIE VERFAHREN ZUR BILDUNG DER BEFESTIGUNGSANORDNUNG**
FASTENING ARRANGEMENT AND METHOD FOR FORMING A FASTENING ARRANGEMENT
ENSEMBLE DE FIXATION ET PROCÉDÉ DE FORMATION DE L'ENSEMBLE DE FIXATION

(30) Priorität: 26.10.2015 DE 102015220862
(43) Veröffentlichungstag der Anmeldung: 05.09.2018
(73) Patentinhaber: Schaeffler Technologies AG & Co. KG, 91074 Herzogenaurach (DE)
(72) Erfinder: MARSCHALKOWSKI, Kay, 91093 Heßdorf (DE); MEISBORN, Marco, 91315 Höchstadt a.d. Aisch (DE); ADAM, Tobias, 91448 Emskirchen (DE)
(86) Internationale Anmeldenummer: PCT/DE2016/200480
(87) Internationale Veröffentlichungsnummer: WO 2017/071705

(56) Entgegenhaltungen:
- DE-A1-102012 011 848
- DE-A1-102013 203 095

## Beschreibung

Die Erfindung betrifft eine Befestigungsanordnung mit einem Befestigungselement und mit einem Befestigungspartner, wobei der Befestigungspartner eine Aufnahme aufweist und das Befestigungselement zumindest abschnittsweise in der Aufnahme angeordnet ist, wobei das Befestigungselement einen Schaft aufweist, wobei der Schaft in Umlaufrichtung mindestens einen Strukturabschnitt und mindestens einen Freiabschnitt aufweist, wobei der Strukturabschnitt einen größeren Außendurchmesser als der Freiabschnitt aufweist, und wobei die Aufnahme einen Mittelbereich aufweist, in dem der Schaft angeordnet ist. Ferner betrifft die Erfindung ein Verfahren zur Montage der Befestigungsanordnung.

Es sind zahlreiche Verbindungstechniken zum Fügen von Bauteilen bekannt. So werden beispielsweise Stifte, Schrauben, Nieten, Passfedern, Keile, Nägel und andere Befestigungsmittel verwendet, um zwei Bauteile miteinander dauerhaft zu verbinden. Besonders häufig werden Schrauben als Verbindungsmittel verwendet, um eine kraft- und formschlüssige Verbindung herzustellen.

Neben üblichen Schrauben, welche ein vollständig umlaufendes Gewinde tragen, sind auch Befestigungsmittel bekannt, an denen ein Gewinde nur abschnittsweise ausgebildet ist.

Beispielsweise offenbart die Druckschrift DE 10 2012 103 179 A1 ein Verfahren und eine Vorrichtung zur spanlosen Herstellung eines Außengewindes auf Werkstücken aus Metall. Das Werkstück kann insbesondere als stabiles Verbindungs- oder Befestigungsmittel ausgebildet sein. Es ist vorgesehen, dass - in Umlaufrichtung betrachtet - nur ein Teilsegment des Werkstücks mit einem Gewinde versehen wird.

Die DE 10 2012 011 848 A1 offenbart eine Befestigungsanordnung zum Befestigen eines ersten Bauteils an einem zweiten Bauteil, wobei die Befestigungseinrichtung ein zylindrisches Element und ein hülsenförmiges Element umfasst.

Die DE 10 2013 203 095 A1 beschreibt ein Saugmodul einer Frischluftanlage. Es ist ein Zuganker mit einem Kopf und einem Schaft vorhanden; der in eine Ankeröffnung eines Gehäuses hineinragt.

Es ist Aufgabe der vorliegenden Erfindung, eine Befestigungsanordnung vorzuschlagen, welche schnell montierbar ist. Diese Aufgabe wird durch eine Befestigungsanordnung mit dem Merkmal des Anspruchs 1 sowie durch ein Verfahren zur Montage der Befestigungsanordnung mit den Merkmalen des Anspruchs 7 gelöst. Bevorzugte oder vorteilhafte Ausführungsformen der Erfindung ergeben sich aus den Unteransprüchen der nachfolgenden Beschreibung sowie den beigefügten Figuren.

Gegenstand der Erfindung ist eine Befestigungsanordnung, welche ein Befestigungselement und einen Befestigungspartner aufweist. Der Befestigungspartner kann als ein mobiler Befestigungspartner, wie z.B. ein Bauteil, ausgebildet sein. Es ist jedoch auch möglich, dass der Befestigungspartner als ein stationärer Befestigungspartner, wie zum Beispiel eine Wand, ein Gestell einer Maschine etc. ausgebildet ist. Der Befestigungspartner weist eine Aufnahme auf, in der das Befestigungselement zumindest abschnittsweise angeordnet ist. Insbesondere befindet sich die Befestigungsanordnung in einer verriegelten Position, wobei das Befestigungselement und der Befestigungspartner unverlierbar miteinander verbunden sind.

Das Befestigungselement weist einen Schaft auf, wobei der Schaft beispielsweise als ein gerader Zylinderabschnitt, als ein gerader Hohlzylinderabschnitt oder als ein Konusabschnitt ausgebildet ist. Vorzugsweise definiert die Längserstreckung des Schafts, insbesondere dessen Symmetrieachse, eine axiale Richtung. Alternativ oder ergänzend kann die axiale Richtung auch durch eine Einführrichtung des Befestigungselements in den Befestigungspartner definiert sein. Die Aufnahme weist einen Mittelbereich auf, in dem der Schaft angeordnet ist.

Das Befestigungselement weist in seiner axialen Erstreckung mindestens einen Abschnitt auf, welcher in Umlaufrichtung betrachtet mindestens einen Strukturabschnitt und mindestens einen Freiabschnitt hat. Insbesondere wechselt sich in Umlaufrichtung der mindestens eine Strukturabschnitt mit dem mindestens einen Freiabschnitt ab. So kann auch vorgesehen sein, dass der Schaft zwei, drei oder mehr Strukturabschnitte sowie eine insbesondere gleiche Anzahl Freiabschnitte aufweist, welche sich in Umlaufrichtung abwechseln.

Der mindestens eine Strukturabschnitt weist einen größeren Außendurchmesser als der Freiabschnitt auf. Beispielsweise kann der Freiabschnitt durch den Schaft gebildet werden und der Strukturabschnitt ist als ein Zusatzabschnitt auf den Schaft aufgesetzt. Insbesondere ist der Freiabschnitt gegenüber dem Strukturabschnitt in radialer Richtung zurückgesetzt angeordnet. In einer axialen Draufsicht kann sich durch das Abwechseln von Struktur- und Freiabschnitten beispielsweise eine sternförmige Kontur ergeben. Vorzugsweise weist der Schaft einen kleineren Durchmesser auf als der Strukturabschnitt.

Die Aufnahme weist mindestens einen Kanalbereich auf, wobei der Kanalbereich in der axialen Richtung verläuft. Der Kanalbereich bildet einen Einführbereich für den Strukturabschnitt in der axialen Richtung. Sofern mehrere Strukturabschnitte vorgesehen sind, ist eine entsprechend angepasste Anzahl von Kanalbereichen vorgesehen.

Ferner weist die Aufnahme einen Verriegelungsbereich auf, wobei der Verriegelungsbereich in einer Umlaufrichtung zu der axialen Richtung verläuft. Der Verriegelungsbereich wird durch ein Einformen des Strukturabschnitts in den Befestigungspartner gebildet. Insbesondere ist der Verriegelungsbereich durch eine Materialverdrängung von dem Grundmaterial des Befestigungspartner gebildet oder zumindest mit gebildet, wobei die Materialverdrängung durch den mindestens einen Strukturabschnitt gebildet ist.

Der Strukturabschnitt ist in dem Verriegelungsbereich angeordnet, sodass die Befestigungsanordnung verriegelt ist. In beide axiale Richtungen ist die Befestigungsanordnung formschlüssig verriegelt, da das Befestigungselement mit dem Strukturabschnitt in axialer Richtung beidseitig an einer durch den Verriegelungsbereich gebildete Wandung formschlüssig anliegt.

Im Rahmen der Erfindung wird vorgeschlagen, dass der Kanalbereich zumindest zum Teil oder vollständig durch ein Einformen des Strukturabschnitts in den Befestigungspartner gebildet ist.

In dieser Ausgestaltung ist es möglich, dass eine Ausgangsaufnahme als ursprüngliche Aufnahme vor dem Einführen des Befestigungselements in den Befestigungspartner kreisrund ausgebildet ist, wobei der Kanalbereich durch das Einführen des Befestigungselements in die Ausgangsaufnahme eingeformt wird. Der Kanalbereich liegt zumindest abschnittsweise außerhalb des Durchmessers der Ausgangsaufnahme. Auf diese Weise kann die Ausgangsaufnahme z.B. durch ein einfaches Bohren kreisrund eingebracht werden und der Kanalbereich während der Montage der Befestigungsanordnung geformt werden. Damit wird eine kostengünstige Vorbereitung des Befestigungspartners ermöglicht.

In Umlaufrichtung ist das Befestigungselement zumindest in eine Richtung formschlüssig gehalten, da der Verriegelungsbereich in der Umlaufrichtung eine Sackgasse darstellt. In die Gegenrichtung zu der Umlaufrichtung ist das Befestigungselement kraft-und/oder reibschlüssig gehalten.

Die Befestigungsanordnung kann vergleichsweise schnell montiert werden, indem das Befestigungselement in einer axialen Richtung in den Befestigungspartner eingeführt wird. Dabei wird der Strukturabschnitt durch den axial verlaufenden Kanalbereich geführt. Durch ein Schwenken des Befestigungselements in Umlaufrichtung um die axiale Richtung wird der Strukturabschnitt in den Befestigungspartner eingeformt, wobei durch das Schwenken Material des Befestigungspartners durch den Strukturabschnitt verdrängt wird, sodass eine Umformung des Befestigungspartners erfolgt. Durch das Einformen des Strukturabschnitts in den Befestigungspartner unter Ausbildung des in Umlaufrichtung verlaufenden Verriegelungsbereichs wird der Strukturabschnitt und damit das Befestigungselement in beide axiale Richtungen und in Umlaufrichtung formschlüssig fixiert und in der verbleibenden Gegenrichtung zur Umlaufrichtung zumindest kraft- und/oder reibschlüssig gehalten. Durch die Montageart der Befestigungsanordnung kann somit das Befestigungselement mit einer einfachen Axialbewegung und einer nachfolgenden Schwenkbewegung in sehr kurzer Zeit in dem Befestigungspartner verriegelt werden. Insbesondere ist die Befestigungsanordnung als eine Bajonettverbindungsanordnung ausgebildet. Durch die geringe Montagezeit werden Kosten und Aufwand bei der Montage eingespart.

Es ist besonders bevorzugt, dass der Strukturabschnitt als ein Gewindeabschnitt ausgebildet ist. In dieser Ausgestaltung wird durch den Strukturabschnitt im Rahmen der Schwenkbewegung ein Gegengewinde in den Befestigungspartner eingeformt, sodass eine bereits bewährte Fixierung mittels Schraubengewinde auch im Rahmen der erfindungsgemäßen Befestigungsanordnung verwendet werden kann.

Um ein Einformen des Strukturabschnitts in den Befestigungspartner zu erleichtern, ist es bevorzugt, dass der Strukturabschnitt eine in Umlaufrichtung weisende Flanke aufweist, welche rampenartig ausgebildet ist.

Bei einer bevorzugten Ausgestaltung der Erfindung weist das Befestigungselement mindestens oder genau ein Paar von Strukturabschnitten auf, wobei die Strukturabschnitte des Paars um 180° in Umlaufrichtung zueinander versetzt angeordnet sind. In dieser symmetrischen Ausgestaltung wird erreicht, dass sowohl beim Einführen des Befestigungselements in axialer Richtung als auch beim Schwenken des Befestigungselements in Umlaufrichtung eine Symmetrieachse des Befestigungselements konstant bleibt und ein Kippen des Befestigungselements vermieden wird.

Alternativ ist es bevorzugt, dass das Befestigungselement mindestens drei Strukturabschnitte aufweist, welche besonders bevorzugt in Umlaufrichtung regelmäßig voneinander beabstandet sind. Auch in dieser Ausgestaltung wird erreicht, dass das Befestigungselement beim Einführen und/oder beim Schwenken nicht verkippen kann.

Bei einer bevorzugten Weiterbildung der Erfindung weist das Befestigungselement einen Befestigungskopf auf, wobei der Befestigungskopf relativ zu dem mindestens einen Strukturabschnitt verspannt angeordnet ist. Es wird durch die Montage der Befestigungsanordnung somit eine in axiale Richtung wirkende mechanische Spannung zwischen dem Befestigungskopf und dem Strukturabschnitt aufgebaut. Alternativ hierzu kann die Befestigungsanordnung auch unverspannt montiert werden.

In einer möglichen Ausgestaltung der Erfindung umfasst die Befestigungsanordnung einen Bauteilabschnitt, wobei der Bauteilabschnitt zwischen dem Befestigungskopf und dem Strukturabschnitt, insbesondere unter Abstützung auf dem Befestigungspartner, kraftschlüssig gehalten wird. Der Bauteilabschnitt kann beliebig ausgebildet sein und zum Beispiel als ein Bauteil mit einer Durchgangsbohrung zur Aufnahme des Befestigungselements realisiert sein.

Ein weiterer Gegenstand der Erfindung wird durch ein Verfahren zur Montage der erfindungsgemäßen Befestigungsanordnung gebildet, wie diese zuvor beschrieben wurde. Es ist vorgesehen, dass in einer Einführphase das Befestigungselement in einer axialen Richtung in den Befestigungspartner eingeführt wird. In einer nachfolgenden Verriegelungsphase wird das Befestigungselement in Umlaufrichtung verschwenkt, wobei durch das Verschwenken der Strukturabschnitt den Verriegelungsbereich in den Befestigungspartner einformt. Während der Einführphase wird durch den Strukturabschnitt der Kanalbereich in den Befestigungspartner eingeformt.

Weitere Merkmale, Vorteile und Wirkungen der Erfindung ergeben sich aus der nachfolgenden Beschreibung eines bevorzugten Ausführungsbeispiels der Erfindung sowie der beigefügten Figuren. Abgebildet sind in:
Figur 1 ein Befestigungselement einer Befestigungsanordnung in einer Seitenansicht und in einer Draufsicht von unten;
Figur 2 eine Illustration zur Erläuterung des Verfahrens zur Montage der Befestigungsanordnung.

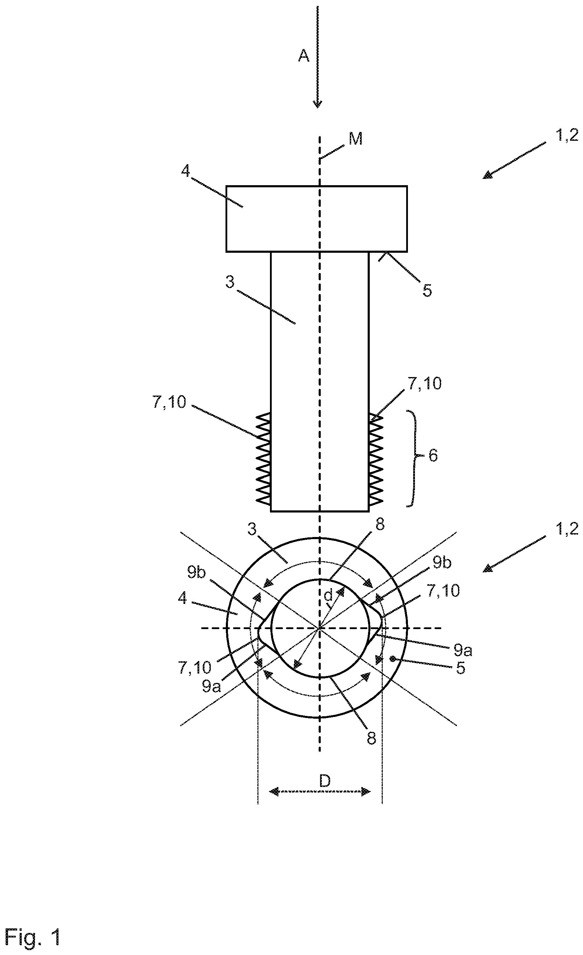

Die Figur 1 zeigt in einer stark schematisierten Zeichnung ein Befestigungselement 1, welche einen ersten Teil einer Befestigungsanordnung 2 bildet.

Das Befestigungselement 1 weist einen Schaft 3 auf, wobei der Schaft 3 als ein kreisrunder Zylinder ausgebildet ist. Der Schaft 3 definiert eine axiale Richtung A. An einem oberen Ende des Schafts 3 ist ein Befestigungskopf 4 angeordnet und mit dem Schaft einstückig verbunden. Der Befestigungskopf 4 ist in einer axialen Draufsicht kreisrund ausgebildet. Er weist an seiner axialen, dem Schaft 3 zugewandten Unterseite eine Auflagefläche 5 auf, welche in diesem Beispiel kreisringflächig ausgebildet ist. Prinzipiell kann der Befestigungskopf 4 zum Beispiel wie ein Schraubenkopf ausgebildet sein und auch eine Schnittstelle für einen Schraubendreher, Imbusschlüssel etc. aufweisen. Die Unterseite mit der Auflagefläche 5 kann - wie gezeigt - sich in einer Radialebene senkrecht zu dem Schaft 3 erstrecken oder beispielsweise auch konusförmig etc. ausgebildet sein.

Der Schaft 3 oder das Befestigungselement 1 in seiner Gesamtheit definiert eine Mittelachse M, welche symmetrisch in dem Schaft 3 bzw. Befestigungselement 1 angeordnet ist. Die Mittelachse M legt eine axiale Richtung A fest.

An dem, dem Befestigungskopf 4 abgewandten Ende erstreckt sich ein Axialabschnitt 6 des Schafts, welcher in Umlaufrichtung um die Mittelachse M in verschiedene Winkelsegmentabschnitte unterteilt ist.

Wie sich insbesondere aus dem unteren Teil der Figur 1 ergibt, welcher eine axiale Draufsicht von unten auf das Befestigungselement 1 zeigt, weist das Befestigungselement 1 in dem Axialabschnitt 6 zwei Strukturabschnitte 7 und zwei Freiabschnitte 8 als Winkelsegmentabschnitte auf. Die Freiabschnitte 8 werden durch die Oberfläche des Schafts 3 gebildet. Die Strukturabschnitte 7 weisen einen Außendurchmesser D auf, welcher größer ausgebildet ist als der Außendurchmesser d der Freibereiche 8, welcher durch den Außendurchmesser des Schafts 3 gebildet ist. Die Strukturabschnitte 7 erstrecken sich um ca. 60° um die Mittelachse M. Die zwei Strukturabschnitte 7 sind in Bezug auf die Mittelachse M um 180° zueinander versetzt und/oder gegenüberliegend zueinander und bspw. symmetrisch angeordnet. Die Strukturabschnitte 7 weisen in der axialen Draufsicht in Umlaufrichtung jeweils beidseitig eine bspw. aufsteigende bzw. absteigende Flanke 9a, 9b auf, welche den Außendurchmesser d der Freibereiche 8 mit dem Außendurchmesser D der Strukturabschnitte 7 verbindet. In der seitlichen Draufsicht auf das Befestigungselement 1 ist zu erkennen, dass die Strukturabschnitte 7 als Gewindeabschnitte 10 ausgebildet sind, welche ein die Mittelachse M abschnittsweise umlaufendes Gewinde tragen. Das Gewinde kann eine positive Steigung aufweisen, es kann jedoch auch mit einer Gewindesteigung von Null oder sogar mit einer negativen Steigung ausgebildet sein.

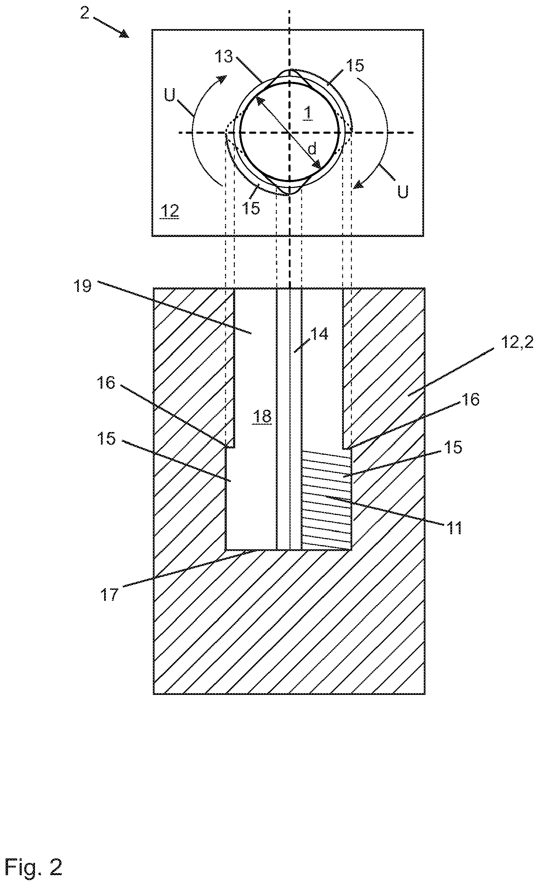

Das Verfahren zur Montage der Befestigungsanordnung wird in Zusammenhang mit der Figur 2 erläutert: In der Figur 2 ist in einer Schnittdarstellung ein Befestigungspartner 12 dargestellt, welcher zum Beispiel als ein Ausschnitt aus einem Gestell, einer Wand oder dergleichen ausgebildet sein kann. Der obere Bereich der Figur 2 zeigt eine schematische Draufsicht auf die Befestigungsahordnung 2 mit dem Befestigungselement 1 in dem Befestigungspartner 12. Der Befestigungskopf 4 ist zeichnerisch unterdrückt.

In einer unmontierten Ausgangssituation weist der Befestigungspartner 12 eine Ausgangsaufnahme 13 mit einem bspw. kreisrunden Querschnitt auf, wie dies im oberen Bereich der Figur 2 gezeigt ist.

Der freie Durchmesser der Ausgangsaufnahme 13 ist größer als der Außendurchmesser d des Schafts 3 und/oder der Freiabschnitte 8 und zugleich kleiner als der Außendurchmesser D der Strukturabschnitte 7 gewählt.

In einer Einführphase wird das Befestigungselement 1 in axialer Richtung in die Ausgangsaufnahme 13 des Befestigungspartners 12 eingeführt. Allerdings ist der Außendurchmesser D der Strukturabschnitte 7 größer als der freie Durchmesser der Ausgangsaufnahme 13 gewählt, sodass bei dem axialen Einführen ein Kanalbereich 14 in die Wandung der Ausgangsaufnahme 13 in den Befestigungspartner 12 eingeformt wird. Der Kanalbereich 14 erstreckt sich in axialer Richtung.

Wenn bspw. das Befestigungselement 1 seine vorgegebene Einführtiefe erreicht hat, wird dieses in einer Umlaufrichtung U zum Beispiel um einen Winkel von 90° um die Mittelachse M verschwenkt. Bei einer positiven Steigung wird das Befestigungselement 1 bei der Verschwenkung weiter axial in den Befestigungspartner 12 eingefahren. Bei einer Gewindesteigung von Null bleibt die Einführtiefe konstant. Bei einer negativen Steigung wird die Einführtiefe verringert. Bei dem Verschwenken werden die Strukturabschnitte 7 aus dem Kanalbereich 14 weitergedreht, wodurch ein Verriegelungsbereich 15 in die Wandung der Ausgangsaufnahme 13 des Befestigungspartners 12 eingeformt wird. Bei der Einformung werden durch die als Gewindeabschnitte 8 ausgebildeten Strukturabschnitte 7 in die Wandung der Ausgangsaufnahme 13 des Befestigungspartners 12 Gewindegangabschnitte 11 eingeformt, welche eine Verschraubung mit den Gewindeabschnitten 10 bilden. Dadurch, dass der Außendurchmesser D der Strukturabschnitte 7 größer als der freie Durchmesser der Ausgangsaufnahme 13 ist, ergibt sich für die Strukturabschnitte 7 und damit für das Befestigungselement 2 eine formschlüssige Anlage an mindestens einer Strukturflanke 16 in beide axialer Richtung gegen ein Herausziehen des Befestigungselements 2, sodass dieses formschlüssig in dem Befestigungspartner 12 gehalten ist. In Gegen- und/oder Radialrichtung kann das Befestigungselement 2 formschlüssig durch einen Boden 17 gesichert sein oder das Befestigungselement 2 ist über die Strukturflanke 16 mit dem Befestigungspartner 12 verspannt. In Umlaufrichtung U ist das Befestigungselement 2 durch die Strukturabschnitte 7 formschlüssig gesichert. In einer Gegenrichtung zu der Umlaufrichtung U ist das Befestigungselement 2 kraft- und/oder reibschlüssig und/oder formschlüssig gegen ein Herausdrehen - ähnlich wie eine normale Schraube - gesichert. Der Befestigungspartner 12 bildet eine Aufnahme 18 für das Befestigungselement 1, welches gedanklich in einen Mittelbereich 19 zur Aufnahme des Schafts 3, die Kanalbereiche 14 zur Führung der Strukturabschnitte 7 und die Verriegelungsbereiche 15 zur Aufnahme der Strukturabschnitte 7 aufgeteilt werden kann.

Der freie Durchmesser der Ausgangsaufnahme 13 ist in dem Befestigungspartner 12 so gewählt, dass stets ausreichend Platz verbleibt, um das durch die Strukturabschnitte 7 umgeformte Material aus Kanalbereich 14 bzw. aus Verriegelungsbereich 15 ausreichend abfließen lassen zu können.

Beispielsweise kann zwischen dem Befestigungskopf 4 und dem Befestigungspartner 12 ein beliebiger Bauteilabschnitt (nicht gezeigt) angeordnet werden und durch die Befestigungsanordnung 2 befestigt, insbesondere gefügt werden.

Es ist möglich, dass statt einer kreisrunden Ausgangsaufnahme 13 eine Öffnung (nicht gezeigt) verwendet wird, welche bereits die Kanalbereiche 14 teilweise ausgebildet aufweist. In diesem Fall kann die Einführphase zur Montage der Befestigungsanordnung vereinfacht werden. Es ist sogar möglich, dass die Ausgangsaufnahme 13 die Kanalbereiche 14 in einem Übermaß vorsieht, sodass das Befestigungselement 1 besonders einfach eingeführt werden kann. Die Verriegelung erfolgt nach wie vor durch ein Schwenken des Befestigungselements 2 um die Mittelachse M.

### Bezugszeichenliste

- 1: Befestigungselement
- 2: Befestigungsanordnung
- 3: Schaft
- 4: Befestigungskopf
- 5: Auflagefläche
- 6: Axialabschnitt
- 7: Strukturabschnitte
- 8: Freiabschnitte
- 9a: Flanke
- 9b: Flanke
- 10: Gewindeabschnitte
- 11: Gewindegangabschnitte
- 12: Befestigungspartner
- 13: Ausgangsaufnahme
- 14: Kanalbereiche
- 15: Verriegelungsbereich
- 16: Strukturflanke
- 17: Boden
- 18: Aufnahme
- 19: Mittelbereich
- M: Mittelachse
- d: Außendurchmesser
- D: Außendurchmesser
- U: Umlaufrichtung

## Patentansprüche

1. Befestigungsanordnung (2)
mit einem Befestigungselement (1) und mit einem Befestigungspartner (12), wobei der Befestigungspartner (12) eine Aufnahme (18) aufweist und das Befestigungselement (1) zumindest abschnittsweise in der Aufnahme (18) angeordnet ist,
wobei das Befestigungselement (1) einen Schaft (3) aufweist, wobei der Schaft (3) in Umlaufrichtung (U) mindestens einen Strukturabschnitt (7) und mindestens einen Freiabschnitt (8) aufweist, wobei der Strukturabschnitt (7) einen größeren Außendurchmesser (D) als der Freiabschnitt (8) aufweist,
wobei die Aufnahme (18) einen Mittelbereich (19) aufweist, in dem der Schaft (10) angeordnet ist, wobei die Aufnahme (18) mindestens einen Kanalbereich (14) und mindestens einen Verriegelüngsbereich (15) aufweist, wobei der Kanalbereich (14) in eine axiale Richtung verläuft und ein Einführen des Strukturabschnitts (7) in der axialen Richtung ermöglicht, wobei der Verriegelungsbereich (15) in einer Umlaufrichtung (U) verläuft und durch ein Einformen des Strukturabschnitts (7) in den Befestigungspartner (12) gebildet ist, und wobei der Strukturabschnitt (7) in dem Verriegelungsbereich (15) angeordnet ist, so dass die Befestigungsanordnung (2) verriegelt ist, **dadurch gekennzeichnet, dass** der Kanalbereich (14) durch ein Einformen des Strukturabschnitts (7) in den Befestigungspartner (12) gebildet ist.

2. Befestigungsanordnung (2) nach Anspruch 1, **dadurch gekennzeichnet, dass** der Strukturabschnitt (7) in beiden axialen Richtungen und in der Umlaufrichtung (U) formschlüssig und entgegen der Umlaufrichtung (U) reibschlüssig und/oder kraftschlüssig in dem Befestigungspartner gesichert ist.

3. Befestigungsanordnung (2) nach einem der vorhergehenden Ansprüche, **dadurch gekennzeichnet, dass** der Strukturabschnitt (7) als ein Gewindeabschnitt (10) ausgebildet ist.

4. Befestigungsanordnung (2) nach einem der vorhergehenden Ansprüche, **dadurch gekennzeichnet, dass** das Befestigungselement (1) mindestens ein Paar von Strukturabschnitten (7) aufweist, wobei die Strukturabschnitte (7) des Paars um 180° in Umlaufrichtung (U) zueinander versetzt angeordnet sind.

5. Befestigungsanordnung (2) nach einem der vorhergehenden Ansprüche, **dadurch gekennzeichnet, dass** das Befestigungselement (1) einen Befestigungskopf (4) aufweist, wobei der Befestigungskopf (4) relativ zu dem mindestens einen Strukturabschnitt (7) verspannt angeordnet ist.

6. Befestigungsanordnung (2) nach Anspruch 5, **gekennzeichnet, durch** einen Bauteilabschnitt, wobei der Bauteilabschnitt zwischen dem Befestigungskopf (4) und dem Befestigungspartner (12) kraftschlüssig und/oder formschlüssig gehalten wird.

7. Verfahren zur Montage der Befestigungsanordnung (2) nach einem der vorhergehenden Ansprüche, **dadurch gekennzeichnet, dass** in einer Einführphase das Befestigungselement (1) in einer axialen Richtung in den Befestigungspartner (12) eingeführt wird und in einer Verriegelungsphase in Umlaufrichtung (U) verschwenkt wird, wobei der Strukturabschnitt (7) durch das Verschwenken den Verriegelungsbereich (15) in den Befestigungspartner (12) einformt, wobei in der Einführphase der Strukturabschnitt (7) den Kanalbereich (14) in den Befestigungspartner (12) einformt.

## Claims

1. A fastening arrangement (2) having a fastening element (1) and having a fastening partner (12), the fastening partner (12) having a receptacle (18) and the fastening element (1) being arranged at least in sections in the receptacle (18),
the fastening element (1) having a shaft (3), the shaft (3) in the circumferential direction (U) having at least one structural section (7) and at least one free section (8), the structural section (7) having a larger outer diameter (D) than the free section (8),
the receptacle (18) having a central region (19) in which the shaft (10) is arranged,
the receptacle (18) having at least one channel area (14) and at least one locking area (15), the channel area (14) extending in an axial direction and allowing the structural section (7) to be inserted in the axial direction, the locking area (15) proceeding in a circumferential direction (U) and formed by moulding the structural section (7) into the fastening partner (12), and the structural section (7) being arranged in the locking area (15) so that the fastening arrangement (2) is locked, **characterised in that** the channel region (14) is formed by moulding the structural section (7) into the fastening partner (12).

2. The fastening arrangement (2) according to claim 1, **characterised in that** the structural section (7) in both axial directions and in the circumferential direction (U) is secured in the fastening partner positively and frictionally against the circumferential direction (U) and/or non-positively.

3. The fastening arrangement (2) according to one of the preceding claims, **characterised in that** the structural section (7) is designed as a threaded section (10).

4. The fastening arrangement (2) according to one of the preceding claims, **characterised in that** the fastening element (1) has at least one pair of structural sections (7), the structural sections (7) of the pair being arranged offset to one another by 180° in the circumferential direction (U).

5. The fastening arrangement (2) according to one of the preceding claims, **characterised in that** the fastening element (1) has a fastening head (4), the fastening head (4) being arranged in a braced manner relative to the at least one structural section (7).

6. The fastening arrangement (2) according to claim 5, **characterised by** a component section, wherein the component section is held non-positively and/or positively between the fastening head (4) and the fastening partner (12).

7. A method for assembling the fastening arrangement (2) according to one of the preceding claims, **characterised in that** the fastening element (1) is inserted into the fastening partner (12) in an axial direction in an insertion phase and is pivoted in the circumferential direction (U) in a locking phase, wherein the structural section (7) forms the locking area (15) in the fastening partner (12) by pivoting, wherein the structural section (7) forms the channel area (14) in the fastening partner (12) in the insertion phase.

## Revendications

1. Dispositif de fixation (2) comprenant un élément de fixation (1) et un partenaire de fixation (12), ledit partenaire de fixation (12) comportant un logement (18) et ledit élément de fixation (1) étant disposé, au moins par sections, dans le logement (18),
l'élément de fixation (1) comportant un arbre (3), ledit arbre (3) comportant, dans une direction périphérique (U), au moins une section structurelle (7) et au moins une section libre (8), ladite section structurelle (7) ayant un diamètre extérieur (D) supérieur à la section libre (8),
le logement (18) comportant une zone centrale (19), dans laquelle est disposé l'arbre (10),
le logement (18) comportant au moins une zone de canal (14) et au moins une zone de verrouillage (15), ladite zone de canal (14) s'étendant dans une direction axiale et permettant l'insertion de la section structurelle (7) dans la direction axiale, ladite zone de verrouillage (15) s'étendant dans une direction périphérique (U) et étant formée par pénétration de la section structurelle (7) dans le partenaire de fixation (12), et la section structurelle (7) étant disposée dans la zone de verrouillage (15) de telle sorte que le dispositif de fixation (2) soit verrouillé, **caractérisé en ce que** la zone de canal (14) est formée par pénétration de la section structurelle (7) dans le partenaire de fixation (12).

2. Dispositif de fixation (2) selon la revendication 1, **caractérisé en ce que** la section structurelle (7) est fixée, dans les deux directions axiales et dans la direction périphérique (U), par complémentarité de forme et, à l'encontre de la direction périphérique (U), par friction et/ou à force dans le partenaire de fixation.

3. Dispositif de fixation (2) selon l'une quelconque des revendications précédentes, **caractérisé en ce que** la section structurelle (7) est conçue sous la forme d'une section filetée (10).

4. Dispositif de fixation (2) selon l'une quelconque des revendications précédentes, **caractérisé en ce que** l'élément de fixation (1) comporte au moins une paire de sections structurelles (7), lesdites sections structurelles (7) de la paire étant disposées, dans la direction périphérique (U), décalées l'une de l'autre de 180 °.

5. Dispositif de fixation (2) selon l'une quelconque des revendications précédentes, **caractérisé en ce que** l'élément de fixation (1) comporte une tête de fixation (4), ladite tête de fixation (4) étant contrainte par rapport à ladite section structurelle (7).

6. Dispositif de fixation (2) selon la revendication 5, **caractérisé par** une section de composant, ladite section de composant étant maintenue entre la tête de fixation (4) et le partenaire de fixation (12) par complémentarité de forme et/ou à force.

7. Procédé de montage du dispositif de fixation (2) selon l'une quelconque des revendications précédentes, **caractérisé en ce que**, dans une phase d'insertion, l'élément de fixation (1) est inséré dans le partenaire de fixation (12) dans une direction axiale et, dans une phase de verrouillage, ledit élément de fixation est pivoté dans la direction périphérique (U), la section structurelle (7) formant par pivotement la zone de verrouillage (15) dans le partenaire de fixation (12), dans la phase d'insertion, la section structurelle (7) formant la zone de canal (14) dans le partenaire de fixation (12).
